# EUROPEAN PATENT SPECIFICATION

(11) **EP 0 448 634 B1**
(45) Date of publication and mention of the grant of the patent: **21.02.1996**
(21) Application number: 90901344.3
(22) Date of filing: 06.12.1989
(51) Int. Cl.: F02M 51/02, F02M 55/00, F02M 69/08

(54) **FUEL INJECTION DEVICE WITH AIR-ASSISTED FUEL DIFFUSION**
BRENNSTOFFEINSPRITZGERÄT MIT LUFT-UNTERSTÜTZTER BRENNSTOFFDIFFUSION
DISPOSITIF D'INJECTION DE CARBURANT AVEC DIFFUSION DE CARBURANT ASSISTEE PAR AIR

(30) Priority: 07.12.1988 DE 3841088
(43) Date of publication of application: 02.10.1991
(73) Proprietor: SIEMENS AKTIENGESELLSCHAFT, D-80333 München (DE)
(72) Inventor: Mesenich, Gerhard, Dipl.-Ing., W-5810 Witten (DE)
(86) International application number: US8905511
(87) International publication number: WO9006438

(56) References cited:
- EP-A- 0 249 313
- EP-A- 0 261 855
- EP-A- 0 306 739
- US-A- 4 224 915
- US-A- 4 610 425
- US-A- 4 708 117

## Description

The subject of the invention concerns a device for the injection of fuel into the suction pipe of combustion motors. The device belongs to the category of injection systems with air-assisted fuel diffusion. The fuel is metered by means of one or more electromagnetic valves and is then transported with the assistance of air to the individual injection locations via small diameter conduits. In addition, a suitable air pump for the generation of pressurized air is described, which functions in conjunction with the fuel injection device and is driven directly by the combustion motor itself.

### Objective of the Invention and State of the Art

The basic design of a device for fuel injection with air-assisted fuel diffusion is familiar, for instance from DE-OS 2920636 (Emmenthal et. al.) In the referenced application no detailed descriptions for construction of the injection device are made.

A practically useful design example of such a device is described in US-Patent 4,708,117. The electromagnetic valve of this device features a flat valve seat with an annular channel. By means of the annular channel very good precision of fuel distribution to the individual cylinders of the combustion motor is achieved. However, the electromagnetic metering valve must be built with a high degree of precision, causing difficulties in manufacturing. Despite the high precision requirements in manufacturing, the sealing capacity of the valve seat is often unsatisfactory. Furthermore, the speed of the opening and closing movements, and their reproducibility, is not always adequate for the desired metering precision in the case of this valve. Alternatively, the use of a ball-type valve obturator has been proposed. With the use of this type of obturator it becomes necessary to arrange the individual metering nozzles in close proximity to each other. This in turn leads to mutual interaction between the flows to the individual nozzles. This type of nozzle arrangement below a ball-type valve obturator results usually in unsatisfactory precision of fuel distribution.

It is furthermore state of the art, to assign an individual injection valve to each cylinder of the combustion motor, and to equip these injectors with devices for the air-assisted fuel diffusion. The injection valves are then usually supplied by means of a fuel manifold which is located above the injection valves. This results in high costs and a rather undesirable additional equipment height above the individual valves. In addition, mounting such an injection system is complicated due to the fact that a multiplicity of individual elements and connections results. Because of the relatively large distance of the injection nozzles, strong pressure variations arise inside the individual valves, and, because of the impaired perfusion of the individual valves with fresh fuel, hot-start problems occur frequently.

Air consumption of this type of injection device with air-assisted fuel diffusion decreases with increasing amount of injected fuel. This behaviour is attributable to the fact that, as the amount of injected material increases, fuel progressively blocks the supply lines, impeding the air flow. This feature considerably complicates adaptation of the rated performance of an air pump to the rated requirements of the injection device.

For state of the art systems, an electrically driven air pump is used to generate the compressed air. The electric drive for the air pump causes increased manufacturing costs. Therefore, it has been desirable to use an air pump which is directly mechanically driven by the combustion motor itself. The use of such pumps has already been proposed several times. The state of the art pumps, however, feature an extraordinarily unfavourable response curve for the amount of air delivered. With directly driven mechanical pumps, the amount of air delivered increases approximately linearly with the number of revolutions, on the other hand, the amount of air required by the injection device decreases with increasing number of revolutions. With state of the art pumps it is therefore necessary to employ complicated and costly means to limit their output.

Applicant has proposed an injection valve with tilt-armature in EP-A-0 454 675, which represents prior art according to Article 54(3)EPC, this device allows for extraordinarily fast floating movements and is easy to manufacture. This injector valve, however, is saddled with the disadvantage that the flat tilt-armature can only be adapted to the usual requirements for rotationally symmetrical mounting conditions by more complicated manufacturing measures. It is the objective of this invention to further develop this injection valve, featuring a tilt-armature, to a simple fuel injection device which allows for an especially simple adaptation to the mounting requirements at the engine, despite the appearance of the initially unfavourable shape of this valve. The injection device shall make use of the known advantages of air-assisted fuel diffusion, and shall simultaneously supply several cylinders of a combustion engine with fuel. The fuel injection device shall allow for especially cost efficient, uncomplicated manufacture, together with improved linearity and repeatability of fuel metering. The compressed air for fuel transport shall be produced by a simple, mechanically driven air pump.

### Brief Description of the Drawings

Fig. 1a is a vertical cross-section through a fuel injection device of the invention, as along line A-A in Fig. 1b.

Fig. 1b is a horizontal cross-section through the device.

Fig. 2a is a fragmentary view of a modification to a portion of the device.

Fig. 2b is a top view of a portion of Fig. 2a.

Fig. 3 is a view like Fig. 2a, showing a modification.

Fig. 4 is a fragmentary view of a modification to another portion of the device.

Fig. 5 is a schematic illustration relating to the device.

Fig. 6 is a vertical cross-section of a modified form of the device.

Fig. 7a is a fragmentary cross-section of a modified form, as taken along line B-B of Fig. 7b.

Fig. 7b is a top plan view, generally along line A-A of Fig. 7a.

### Fuel Injection Device according to this Invention

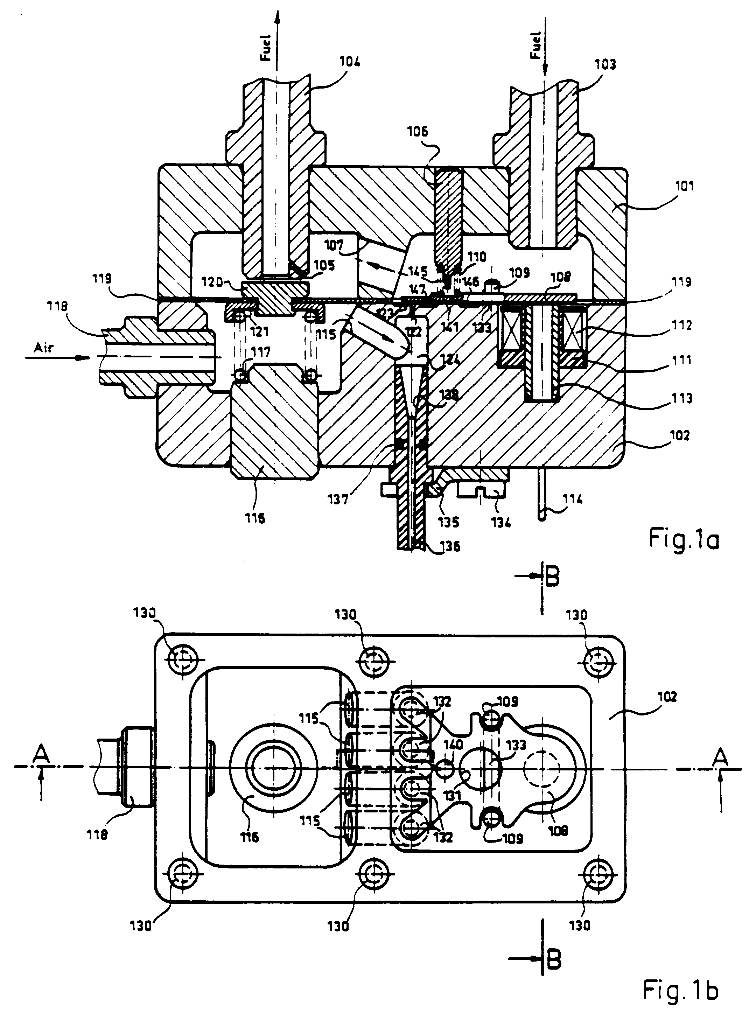

The injection device according to the invention consists of a multifunctional composite in which an electromagnetic metering valve, a fuel pressure regulator, and several mixing chambers are integrated to one mounting part for the purpose of fuel delivery. The electromagnetic valve features a flat tilt-armature which can seal several valve seats. An alternative design can also be equipped with several individual valves. Inside the individual valve seats a separate single metering nozzle is provided, respectively coordinated to each individual cylinder of the combustion engine. The injection device comprises fuel conduits which serve for injection of the fuel into the suction tube of the combustion engine. A preferred design of the injection device is shown in cross-sectional view in Fig. 1a. The armature of the electromagnetic valve and the membrane of the pressure regulator are located in the same plane. Fuel supply, fuel recycle, and compressed air supply are defined by the directional arrows. Fig. 1b provides a top view of valve carrier 102. The cross-sectional drawing shown in Fig. 1a corresponds to the axis A-A shown in Fig. 1b. Identical parts are marked by the same reference numbers. The valve shown in Fig. 1 features four separate metering systems to supply a four-cylinder motor with fuel. The external dimensions of the injection device, in the design shown, are 70x40x40 mm. The injection device will be further detailed in the following, based on Figs. 1a and 1b : The housing of the injection device consists of valve carrier 102 and housing cover 101. Housing cover 101 is connected to valve carrier 102 by threaded connections. The screws are located at the outer periphery of cover 101 and fit into threaded holes 130. Membrane 119 is clamped between valve carrier 102 and housing cover 101. The thickness of membrane 119 is preferably about 0.5 mm. Membrane 119 consists of elastic material and serves to seal the injection device. In addition, membrane 119 provides the bearing for obturator 120 of the fuel pressure regulator. Pressurized fuel flows via intake connector 103 to the magnetic valve region. From there, the fuel proceeds via passage 107 to the pressure regulator. Exiting from the pressure regulator, fuel flows via connector 104 to fuel recycle.

The fuel pressure regulator is in principle a state of the art device, and is designed as a differential pressure controller. By means of such differential pressure regulators, fuel pressure is maintained to a nearly constant amount above the compressed air pressure, even as the compressed air pressure varies. Thus, at metering nozzles 122 a virtually constant differential fuel pressure is effective. The differential fuel pressure preferably is approximately 1 bar. The compressed air pressure is widely variable, depending on the delivery characteristics of the air pump employed, the pressure in the induction tube of the motor, and the amount of injected fuel. Compressed air pressure usually exceeds atmospheric pressure by several 0.1 bar in the case of an idling engine. Under full load, compressed air pressure may exceed atmospheric pressure by as much as 2 bar. Membrane 119, in the pressure regulation region, is impacted by the fuel pressure on its upper side, and by the compressed air pressure on its lower side. As differential fuel pressure increases, obturator 120 is lifted against the forces exerted by governing spring 117 and the air pressure of compressed air in exit connector 104. This causes freeing of an annular slot between obturator 120 and exit connector 104, allowing the pressurized fuel to pass to the virtually unpressured fuel recycle section. Obturator 120 of the pressure regulator is supported by spring bearing 121. Spring 117 of the pressure regulator is borne by pin 116. Pin 116 is pressure fitted into valve carrier 102. The desired differential fuel pressure is set by the depth of insertion of pin 116. In place of the simple obturator described here, gimbal mounted obturators, which are conventionally to pressure control technology, may also be used.

Compressed air enters via connector 118 into the air space of the pressure regulator. From there it passes via passages 115 to mixing chambers 124. The conduits for fuel mixture, 136, are inserted into mixing chambers 124. Transport conduits 136 are provided with tapered entry sections 138 and are held in place by mounting clip 135 secured by screws 134. Gaskets 137 provide the necessary seal. The fuel-air mixture is conducted via conduits 136 to the injection locations in the induction tube of the engine. The internal diameter of conduits 136 should be 1.5-2 times the diameter of the nozzles. Thus, the internal diameter of conduits 136 is about 0.8-1.2 mm. Conduits 136 are preferably made of plastic materials. The diameter of mixing chambers 124 and passages 115 is preferably about 3 mm.

The magnetic circuit of the valve is defined by magnet core 113, flat armature 108, and valve carrier 102. All these components consist of low-retentivity magnetic substances. Magnetic excitiation is by means of magnetic coil 112, which is coiled onto coil body 111. Electrical connection is via contact pins 114. Armature 108 may be provided with a non-magnetic coating on its underside to establish a permanent air gap. By means of such permanent air gaps the reset-time of the magnetic valve is shortened; a state of the art feature.

Flat armature 108 is in the shape of a tilt-lever with fulcrum on bearing element 133. Bearing element 133 is arranged between fitting pins 109. Fitting pins 109 are pressure fitted into valve carrier 102 and provide lateral guidance to armature 108. The facing surface of magnetic core 113 is reset from the plane of the armature bearing. Armature stroke corresponds to the measure of reset of the facing surface. Bearing element 133 should be located at such distance from magnetic core 113 and valve seats 123, that a mechanical advantage with increased armature stroke results in the valve seat region. Armature stroke in the valve seat region preferably is about 0.1-0.15 mm, while the stroke at the magnet core is preferably 0.05-0.1 mm. Armature thickness is preferably 0.8-1 mm, armature mass is about 2 g.

Armature reset is by means of reset-spring 110. Reset-spring 110 is borne by calibration pin 106. Calibration pin 106 is provided with an extension 145 which prevents spring 110 from dropping off during mounting of the injection device. During mounting, armature 108 is fixed by electrically exciting magnetic coil 112, so that the armature does not drop out. Assembly then proceeds by placing valve carrier 102 onto cover 101, followed by threading both together. To provide for easier assembly, cover 101 may alternatively be extended downwards close to armature 108, with the reset-spring then located in a drilled hole in cover 101. Under these conditions falling out of armature 108 and reset-spring 110 is prevented by the extended cover 101. Dynamic calibration of the valve is done by state of the art procedures involving the depth of insertion of the calibration pin.

Armature 108 is additionally supported by limit stop 141 at the bearing location 140 of reset-spring 110. Limit stop 141 prevents unacceptable bending of armature 108 under the influence of the force of the reset-spring. Valve seats 123 are directly machined into valve carrier 102. Valve seat diameter is preferably about 2 mm. Bearing element 133, limit stop 141 and valve seats 123 are all located in the same plane. Between these parts, damping pockets 146 and 147 are arranged, which are preferably fashioned together by stamping of the valve carrier. Alternatively, such damping pockets may also be provided in armature 108. For the given armature design, the depth of the damping pockets should he about 0.2 mm. This relatively large depth of the damping pockets is necessary because of the large fuel displacing surface of armature 108. The function and manufacture of the damping pockets is described in detail in German Patent Application P 3834447 (Electromagnetic Fuel Injector and Methods for its Manufacture).

Armature 108 is preferably manufactured by stamping. Armature 108 should be provided with thin lamellar extensions 132 in the region of valve seats 123. These thin lamellae should have a thickness of about 01.-02 mm. This provides for a certain elasticity of the armature in the valve seat region, and improves the sealing capacity of the valve seats. Alternatively, armature 108 may also be equipped with thin plastic obturators to improve sealing capacity. A further alternative would provide for arranging the individual metering nozzles within one single extended valve seat. With such an arrangement of several metering nozzles inside a single valve seat, the danger of mutual interference of the flow to the individual nozzles arises. Therefore, the arrangement of several separate valve seats, as shown, in general is favoured with respect to hydraulic considerations. To reduce weight and hydraulic forces during armature movement, armature 108 is provided with perforation 131. Armature 108 can additionally be provided with stamped ribs, or may be flanged at the outside or at the perforation, in all cases measures to improve its flexural strength.

The injection device according to the invention offers a multiplicity of essential advantages in comparison with state of the art devices: To start, there is the advantage of simplicity of construction, where tolerances essential to the functioning of the device can be maintained by simple production methods with extreme precision. Finishing of the bearing plane of valve carrier 102 is preferably achieved by a simple surface grinding process. This is followed by stamping the damping pockets and valve seats into the flat surface of valve carrier 102. Valve carrier 102 may also be executed as a sintered part, allowing for omission of the grinding and stamping steps, as long as the production of the sintered piece is done with enough precision. Furthermore, it is possible to fashion the individual seating regions by stamping them, providing for the possibility of centering the stamping tool by means of a pin directly in the nozzle holes. This results in an exactly centered location of the valve seat with respect to the nozzle opening. Such a method of production guarantees uniform in-flow conditions to the nozzle region. Final finishing of the bearing surface of valve carrier 102 should always be done by flat-lapping. The final finishing step for the armature also is by means of a flat-lapping step.

By arranging membrane 119 in the dividing plane of the housing, it is not necessary to employ extensive sealing measures. The supply connectors can be arranged freely in any location, providing for ready adaptability to changing mounting requirements. For example, air supply to the pressure regulator can be arranged to be directly via bearing pin 116, which is then fashioned as a connection piece. Design of the injection device in line with the instant invention provides for large and short cross-sectional diameters, with the pressure regulator being close to valve seats 123. This results in considerable reduction of hydraulic and pneumatic pressure variations, and decreases the danger of icing. All of the feed channels 115 to mixing chambers 124 can be executed with the same length. This guarantees identical oscillation and flow conditions with respect to the individual metering nozzles. The pressure controller can readily follow the pressure pulsations of the air pump, without this leading to unacceptable phase dislocations of the differential fuel pressure above the metering nozzles. Stable hydraulic conditions result, combined with very good linearity of fuel metering.

In order to achieve the lowest possible amplitude of hydraulic pressure variations, the cross-section of connecting passage 107, between valve and controller, should be made as large as possible. Connection passage 107 should be executed to this effect as a short, broad channel, covering as much of the total width of the controller as possible. The design of the injection device in keeping with the present invention allows for an extraordinarily large cross-section of connection channel 107. In addition, the cross-section of feed connector 103 should be kept as small as possible in relation to the cross-section of 107. Favourable conditions are achieved for a feed connector cross-section of about 5 mm for 103, and a cross-section of about 100 mm for 107. By these measures, the formation of damaging pressure waves in the valve is considerably reduced, and their propagation into the feed conduits is largely prevented.

The injection device exhibits excellent characteristics with respect to hot-starting. The complete fuel stream is supplied via the magnetic valve. The valve seats are located directly in the main fuel stream. This guarantees fresh fuel being supplied to the valve seat region even under possible vapour-lock conditions.

With state of the art fuel injection devices, full fuel pressure is maintained for several hours even after engine shutoff. This is necessary to prevent evaporation of the fuel from the injection valve and thus to guarantee fuel supply to the injector during a hot-start of the engine. To maintain fuel pressure a checkvalve is installed in the feed line to the injection valve; this prevents fuel flow-back through the feed line. This involves tough requirements for the tightness of the valve seats, and the seat of the pressure regulator, to prevent untimely dropping off of the fuel pressure. In contrast, the excellent hot-starting ability of the injection device according to the instant invention makes it possible to lower fuel pressure to atmospheric conditions immediately after shutting of the engine. To this effect, a side stream line for fuel is connected parallel to the pressure regulator. To establish this by-pass stream, return flow connector 104 is provided with a small drilled passage 105, its diameter should be of the order of 0.2 mm. The advantage of this lowering of the pressure lies in reduced tightness requirements for the valve seats and in improved working conditions for the fuel pump. Thus, during startup the fuel pump only works against an initially low pressure, guaranteeing the quick flushing out of vapour bubbles. Even under unfavourable starting conditions, fresh fuel will usually be supplied to the injection system within less than a second. The desired by-pass can also be achieved by a rough grinding of the valve seat of the pressure regulator. This measure allows for a further reduction in costs.

Calibration of the injection device is done jointly for both the pressure regulator and the electromagnetic valve. To this effect, valve stroke should be chosen to be as high as possible so that at the individual valve seats fuel flow is choked only to the slightest degree. Static flow is set by setting the differential fuel pressure. Special calibration of armature stroke is not necessary. Dynamic flow characteristics are set by conventional means, by varying the reset-spring force.

For the injection device according to the instant invention a canting of the valve obturators with respect to the valve seats is impossible, given the specific design used. This makes for stable and uniform flow conditions in the individual seat regions, even so the armature stroke is very small.
Uniform fuel distribution is thus guaranteed, even for small armature strokes: this in contrast to the state of the art injection devices of this type. Therefore, in spite of the individual valve seats, the alternative exists to calibrate static flow via changing armature stroke height. Setting of the armature stroke is possible by respective changes in the depth of insertion of magnet core 113, either by pressure fitting or threading. Separate calibration of the controller is then not necessary.

The fuel injection device according to Fig.1 is equipped with a simple electromagnet where magnetic return flow occurs directly by means of the magnetizable valve housing 102. In the following two additional suitable magnetic circuits are proposed for activating the valve; these can be installed as alternatives in the injection device according to Fig.1, with location as indicated by section line B-B.

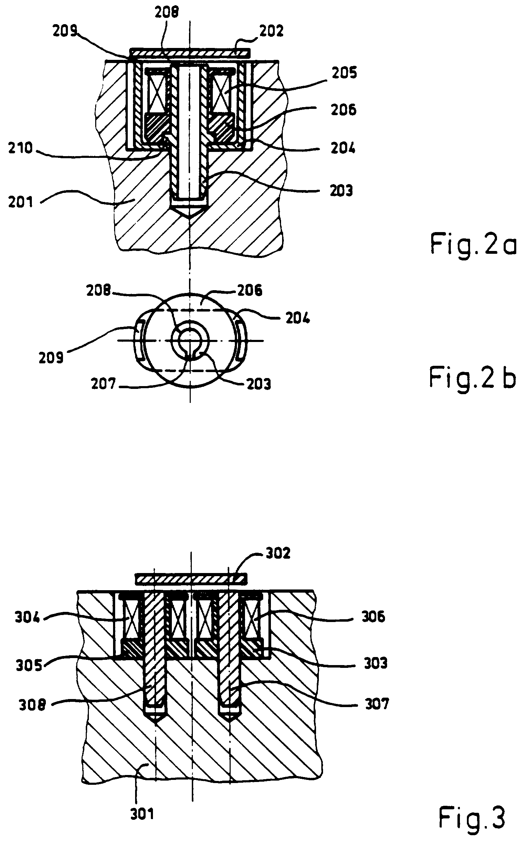

Fig.2 describes an electromagnet with return flow via a yoke 204. The electromagnet is shown in cross-sectional view in Fig. 2a, in top view in Fig. 2b. Identical parts are listed with the same reference numbers.

In fig. 2, the magnetic circuit consists of flat armature 202, magnet core 203, and the return flow part 204. These components are made of low retentivity material. The return flow part 204 takes the shape of a yoke and can be manufactured as a stamped or sintered item. The yoke shape reduces the magnetic resistance between the outer surface of magnet core 203 and the inner surface of part 204 and thus reduces the stray field of the magnetic circuit. Magnet core 203 is pressure fitted into valve carrier 201. Valve carrier 201 should be made of non-magnetizable materiel, since otherwise the magnetic circuit would be partially shorted out. Magnet core 203 can be provided with a longitudinal slot 207. This slot serves to prevent eddy currents and facilitates pressure fitting of magnet core 203. Yoke 204 is clamped by collar 210 of magnet core 203. Magnet core 203 contains coil body 206, onto which coil 205 is wound. The center pole surface 208 should be of about the same magnitude as the total surface of the two side poles 209 togehter. As the armature is energized, it closes against the two side poles 209, while a permanent air gap of preferably about 0.05 mm remains between the armature and center pole surface 208. Alternatively, it is possible to arrange for two permanent air gaps in the region of the two side poles 209, a measure which is less advantageous from magnetic considerations. On the other hand, yoke 204 is largely relieved of mechanical stresses if the permanent air gaps are arranged at the side poles. This has advantages from a vibration technical point of view. Final finishing of the pole surfaces should be done together with the valve carrier after mounting.

Another suitable design for the magnetic circuit is shown in Fig. 3. In this case the circuit features two magnet cores 307 and 308, which are pressure fitted into valve carrier 301. The cores carry coil bodies 303 and 305, onto which coils 304 and 306 are wound. The always necessary permanent air gap is formed by non-magnetizable valve carrier 301. Armature 302 closes directly against the magnet cores in the energized state. Coils 304 and 306 are excited together and are electrically in parallel or series connection. The coils are magnetized in such a way that current flow in the two coils is in opposite directions. This magnetic circuit design offers the advantage of simple and stable mechanical construction, combined with especially low stray field generation.

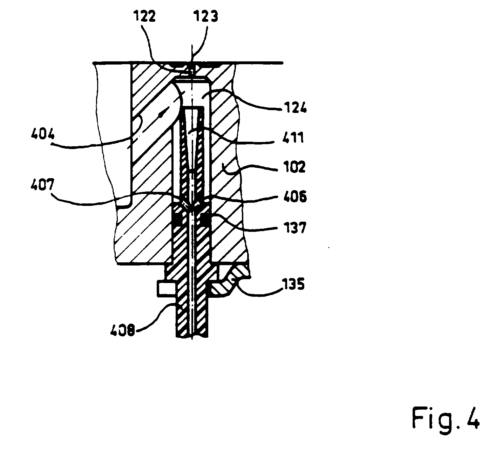

Fig. 4 shows an alternative mixing device which offers advantages in fuel-mix generation, especially for very low pressure transport air. Conduit 408 in this case is provided with additional side-passages 406 and 407, these allow for additional air access from the side. This causes the fuel to foam up in the conduits at low air pressure. Such low pressures can arise during motor startup when the injection device is driven by a mechanical pump, or when the injection device is provided with air at only atmospheric pressure.

The mixing device according to Fig. 4 is of similar design as that shown in Fig. 1. What is shown is a segment of valve carrier 102. Identical parts in both Figs. 1 and 4 are given the same reference numbers. Compressed air from the pressure controller enters mixing chamber 124 via passage 404. Passage 404 points toward injection nozzle 122, so that injection occurs about into the flooding point of the admitted air. This measure reduces the impact of pneumatic pulsations on the linearity of metered fuel supply. Fuel-mix conductor 408 is inserted into mixing chamber 124. The upper segment of conduit 408 contains the tapered feed adaptor 411. Side stream air passes along the outside of 411 to side passages 406 and 407. As fuel is injected, a low pressure zone develops inside 408, causing additional air to be sucked in through side passages 406 and 407. Conduit 408 is sealed by means of gasket 137 and is held in place by fastening clip 135. Fuel-air mixture is carried by conduit 408 to the injection locations in the induction tube of the motor.

Supply of the injection device with pressurized air is preferably by means of a pump which is directly driven by the combustion engine. In general, the well known positive displacement pumps are suitable. Such pumps are of the type of single or double-action membrane or piston pumps. By double-action pumps we understand those pumps where two work spaces are arranged on either side of the displacement piston. For these state of the art positive displacement pumps, the suction side volume increases about linearly with the number of revolutions.

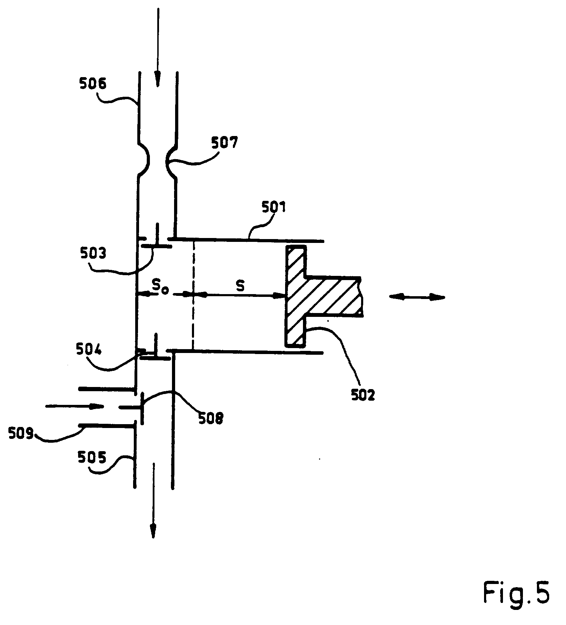

Fig. 5 shows a single-action air pump of the positive displacement type. Intake air enters via feed pipe 506, passes intake valve 503 and reaches cylinder 501. Compressed air exits via exit valve 504 into outlet pipe 505. Outlet pipe 505 is connected to the air intake connector of the injection device. Cylinder 501 contains piston 502 which goes through stroke s. The piston may be driven by a crankshaft or a cam. The upper dead center position of the piston stroke is shown by a broken line. At the upper dead center position of piston 502 remains distance sₒ to the cylinder cover. The remaining cylinder volume is referred to as dead-space volume.

As the revolutions per minute of the combustion motor increase, the problem arises that the volume of compressed air produced grows considerably faster than the absorptive capacity of the injection device, if no restrictive measures are taken. Because of the inadequate absorptive capacity, the compressed air pressure, without restrictive measures, far exceeds the permissible pressure. The rated volume efficiency of the usual pumps is totally unsuitable for use with the injection device. In principle, there exists the possibility to limit the compressed air pressure by means of a pressure regulator which is installed downstream from the pump. Excess air would then be bled off by the pressure controller. Such measures would, however, be burdened by a large drop in the efficiency factor of the pump and would imply additional costs.

Applicants investigations have resulted in the knowledge that the familiar positive displacement pumps can be adapted to the type of injection device described in the invention; adaptation is possible by means of special variations in the dimensions of these pumps. Adaptation of the rated pump performance to the adsorptive capacity of the injection device is by means of a significantly enlarged dead space volume for the pump. The efficiency factor of such an adaptation is considerably more favourable than that of controlled bleeding-off. In addition, the larger dead space volume allows for an especially simple and cost efficient construction of the pump. The maximum air pressure produced decreases with increasing dead space volume. Dead space volume is increased to such an extent that the maximum pressure, under full load by the combustion engine, does not exceed about 2 bar. The dead space volume of a respective pump cylinder in general will be about 50% of total piston displacement. For conventional air pumps, the usual objective is to keep dead space to a minimum in order to obtain a pump with a high efficiency rating. Normally, dead space is reckoned to be 5-10% of pump displacement. By means of this considerable enlargement of dead space, in contravention of the familiar basic rules of pump design, reliable pressure limitation is achieved.

In addition, feed connector 506 can be provided with a choke section 507; its free cross-section under stationary flow conditions should be 2-4 times the total free cross-section of the fuel-mixture carrying conduits of the injection device. Exit pipe 505 can be connected with outside air via an additional intake pipe 509 and by-pass valve 508. This makes it possible to suck in additional air under the conditions where the pump, at lowest RPM's at lowest load of the engine, only delivers low air volume; under these conditions a subpressure exists at the engine induction tube which activates by-pass inlet 508.

Furthermore, the pressure pulses generated by the pump should occur synchronous with the individual injection events. By synchronizing pressure pulses with individual injection events, the precision of fuel metering can be considerably improved. For trouble free performance of the injection device with a four-cycle engine, at least one pressure pulse must occur for every two motor revolutions. Otherwise a variable, periodically rising and falling average rate of flow would result in the fuel-mix bearing conduits between sequential injection events, this in turn would have the consequence of undesirable, periodically rising and falling amounts of fuel injected. The pump is suitable driven by means of a cam attached to the shaft of the combustion motor. This also synchronizes the pressure pulses of the pump with the individual injection events in the simplest possible way. Alternatively, a suitable pump can also be driven from the crankshaft of the combustion motor by gears or belts, either at the same revolutions, or at half the revolutions of the combustion engine.

The amount of air aspirated by the pump per crankshaft revolution of the combustion engine, under idling conditions, should be about 1% of piston displacement of the combustion engine. For low RPM's, the air volume aspirated per revolution of the pump corresponds approximately to the piston displacement of the pump. By means of a correspondingly shaped double-cam, it is possible to achieve one working cycle of the pump per revolution of the crankshaft. For one pump working-cycle per revolution of the crankshaft, the pump displacement should be about 20 cm for a combustion engine of 2 Liter displacement.

As the combustion engine starts up, the problem exists that due to the very low starting RPM's, even with relatively large pumps, no significant excess static pressure can be built up. The partial vacuum in the engine induction tube is also very low during startup and is not able to assist in a significant way in generating an air stream in the fuel conduits. Despite these conditions, with a synchronized pump drive, starting of the motor is readily possible even given the very small displacement volume of the pump. Initially, fuel piles up in the fuel conduits, more or less blocking them. Because of this blocking, pressure buildup is then possible and the fuel is blown out. This type of flow is referred to as plug-flow. Fuel preparation can be improved in this case through the mixing device described in Fig. 4. In order to bring about the fastest possible pressure buildup, no pressure accumulator should be installed between pump and injection device. Such pressure accumulators are otherwise routine in pump construction in order to dampen pressure pulsations and achieve uniform air flow. With the injection device according to the instant invention, omission of such a pressure accumulator does not cause any significant impairment of the precision ot fuel metering.

Adaptation of the rated pump performance to the absorptive capacity of the injection device can be further improved by the solid state choke 507 in intake pipe 506. This results in additional limitation of the maximum flow volume. Air flow at the choke location is strongly affected by pulsations. These pulsations become stronger, the closer the choke position is to the injection device. Choke-pulsations can be decreased by interposing an accumulator between choke location and inlet valve. For an accumulator installed in this manner, resulting in uniform flow-through of the choke location, the free cross-section of the latter should be 2-4 times the total free cross-sections of all fuel-mix conduits of the injection device. If the choke location is very close to the intake valve, its necessary free cross-section must be approximately doubled because of strong pulsations.

The injection device according to the instant invention can be equipped with several electromagnetic valves so as to avoid an unfavourable excessive width and mass of the armatures. For instance, it is suitable for 6-cylinder motors, to provide two separate electromagnetic valves, arranged in the same plane, which respectively act on 3 valve seats. The valves are then electrically in a parallel circuit. The electromagnetic valves can be arranged on both sides of the pressure regulator, allowing for the most compact design of the injection device. With several electromagnetic valves installed, it is possible to supply motors with up to twelve cylinders from a single injection device.

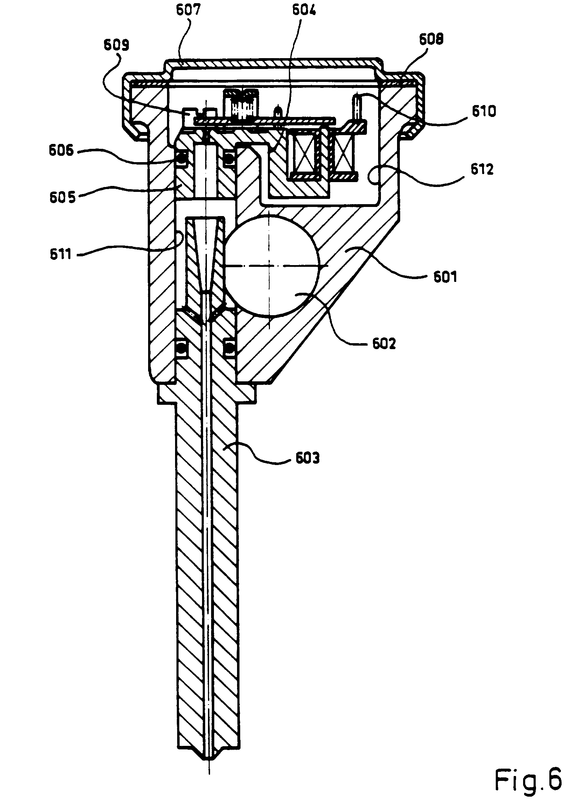

It is also possible to arrange for several, separately triggered electromagnetic valves in a common injection device, allowing for synchronization of the individual injections with the working cycles of the respectively assigned cylinders of the combustion engine. This type of operation is called sequential injection. With this approach the formation of pollutants in the engine is reduced, allowing for engine operation with a leaner mix. With several separate electromagnetic valves a highly cost-efficient injection device results which can satisfy high demands for engine control. Arrangements of the individual injection devices directly inside a fuel manifold is especially advantageous. Such a device is shown in Fig. 6.

Fig. 6 shows a cross-section through a fuel injection device with separate valves, a cross-section through a single valve 604 is represented. The injection valves are arranged next to each other directly in fuel manifold 601. Differing from the usual design, the injection valves are mounted without housing. The principle design of the individual injection valves has already been described EP-A-0 454 675, . Injection valve 604 features a flat tilt-armature and is fastened to the fuel manifold by two screws 609. In the example shown, the valve carrier of the injection valve is made as a sintered piece. At the clamping location the valve carrier features a neck or collar extension 605, which serves to center valve 604 with respect to fuel-mix conduit 603. The neck of valve 604 is inserted into the common channel 611 of the fuel manifold 601. To seal 604, a gasket 606 is provided. The magnetic circuit of valve 604 is located directly in fuel channel 612. The magnetic coil of 604 is equipped with contact pins 610. Cabling of the individual valves is directly inside the fuel manifold 601. This makes it possible to provide electrical contact for the valves by means of a single central plug. In addition, the terminal electronic devices for triggering the injection valves can also be arranged to be inside manifold 601. This results in very good heat dissipation from the electronic parts, since they are in the fuel flow. No special cooling elements are necessary for the electronic components. Triggering of the terminal electronic devices can be done with very small cross-section lines, further reducing the cabling requirements. Air-manifold 602 is located below the injection valves. Air-manifold 602 intersects the individual mixing chambers, allowing for air supply to the individual conduits 603. The cross-section of air supply channel 602 should be as large as possible in order to reduce the amplitudes of pneumatic pressure variations. Manifold 601 preferably is made of light metal alloy or plastic. Manifold 601 is closed with cover 607. Cover 607 is sealed by gasket 608 and is flanged onto manifold 601. Alternatively, cover 607 can also be made of plastic, and can be joined to manifold 601 by means of ultrasonic welding. the always necessary pressure controller can be built into manifold 601, or, as a separate commercially avilable item, can be joined directly to the manifold.

The injection device according to Fig. 6 posesses a multiplicity of advantages in comparison with state of the art multi-point injection devices. To start, there is the advantage of the especially simple and cost effective manufacture. Due to the compound construction, a large number of individual connections are not necessary. This significantly simplifies final mounting at the motor. The injection device can be supplied to the motor manufacturer as a complete tested unit. There is little danger of improper handling and contamination by foreign materials. Compared to state of the art individual valves, considerably less danger of improper mounting exists during final assembly. The plastic fuel-mix conduits 603 can neutralize even larger tolerance deviations. In Case of possible leakage at the joints of fuel-mix conduits 603 with manifold 601, only almost pure air will leak out, reducing the danger of fire hazard considerably in comparison with the conventional multi-point injectors. In case of possible accidents, fire hazard is also considerably reduced.

In addition, the injection device features significant functional advantages, when compared to the conventional multi-point injection devices with separate valves. Only very minor hydraulic pressure pulsations occur, which significantly enhances the precision of the metered amount of fuel, compared to the case for the conventional individual valves. Such pressure pulses form with the individual valves mainly in the relatively narrow connecting channels between fuel manifold and valve seats, and also inside the valve housing. Furthermore, inside the conventional individual valves very steep pressure peaks are generated by fuel being displaced by the armature movement and also from housing vibrations. In addition, in conventional individual valves the blowing out of vapour bubbles often is not readily accomplished because of the narrow connecting channels. In the injection device according to Fig. 6, pressure pulsations are largely prevented a priori by the total immersion of the valves in the fuel itself and because of the absence of a valve housing. The minor remaining pressure pulses can dissipate very quickly because of the elasticity of the fuel conduits. For a design where manifold 601 consists of plastic material, pressure pulses are virtually eliminated due to the elasticity of the material.

Due to the fact that the valves are completely surrounded by fuel, excellent hot-starting results, even for low fuel pressure. Therefore, it is quite acceptable to lower fuel pressure to atmospheric pressure directly after engine shutoff. Lowering fuel pressure after engine shutoff in the system according to Fig. 1 is done by means of a by-pass which is parallel to the pressure regulator.

The conventional individual valves tend to the formation of deposits inside the injection nozzles. This tendency increases, with increasing thermal loading of the injection nozzles. Thermal stress on the injection nozzles is exceedingly low in the injection device according to Fig. 6, again because of the fact that the flowing fuel surrounds the valves, and because of the large distance of the metering nozzles from the injection location. Thus, there is no danger here of deposit formation inside the injection nozzles.

The fuel injection device is mounted directly above the induction tube of the combustion motor. This results in only a short length of the individual fuel-mix conduits 603, usually in the order of 70 mm. Because of the short fuel-mix conduits, only a brief delay in fuel transport results. This results in very good control of time sequential fuel delivery to the individual cylinders as the individual valves are triggered. Because of the compressed air diffusion of the fuel, excellent fuel presentation is provided. The injection device is well suited to lean running of the motor.

With the low pressure difference of the transport air, the fuel can pass through the short, strait conduits (603) in a very short time, based on the kinetic energy of fuel stream alone. Therefore, even for very low differential pressure of the transport air, a fast fuel supply to the motor is guaranteed. Because of the short length of the transport conduits (603), the air supply line (602) can be designed with a large cross-section in order to reduce pneumatic pulsations. Air supply line (602) in this case acts as a pressure accumulator. Without this feature, unacceptable amplitude phase dislocations of the pressure waves between the individual valves could occur. In contrast, a pressure accumulator of this type would neither be desirable nor suitable in a device according to Fig. 1. In a device according to Fig. 1, where the metering nozzles and the pressure regulator are in close proximity, and given the symmetrical design of the unit, there is no reason to fear any significant phase dislocation. Conduits (136) in the device according to Fig. 1 must be of significant length, 300-400 mm, to establish connection of the device with the motor. Therefore, in a device according to Fig. 1, omission of a pressure accumulator results in shorter fuel transport times under unfavourable running conditions, as has been described previously.

Significant improvements in diffusion can be obtained by adding a special spray-diffuser at the end of each transport conduit. To this effect, conduit 603 can be arranged to be inside an outer jacketing tube which is directly joined to mixing chamber 611. This outer jacket tube takes a side stream of air from mixing chamber 611 and conducts it in the outer passage to the diffuser device which is installed further downstream. The fuel-mix which was prepared in the mixing chamber passes then through the downstream diffuser device into the induction tube of the motor. The advantage of adding a downstream diffuser is to be found in the fact the the internal cross-section of the transport conduit can be made relatively large in order to avoid wetting the walls of the conduit tubes with fuel. Undesired wetting of the walls reduces fuel transport speed and impairs the quality of fuel diffusion. Wetting of the walls is caused by off-centered or canted installation of the conduits with respect to the fuel stream exiting from the metering nozzle. Under practical conditions, due to tolerance limits, fuel contact with the wall can never be completely avoided, The limits which need to be imposed on the amount of diffuser-air are set by means of a relatively small cross-sectional flow diameter of the downstream diffuser device. This cross-sectional flow diameter should be in the order of 1-2 mm. This side-stream air is conducted through the jacket and fed concentrically past the outlet of conduit 603 into the diffuser device. Any number of conventional diffuser designs can be used. The diffuser may for instance consist of a Laval nozzle or can be a sharp-edged cone. In addition, conventional diffusers may also be directly joined to the transport conduits.

As is well known, fuel prepartion can be considerably improved by heating of the mix component. With the device according to the instant invention, due to the good heat dissipation through the fuel, and the total immersion of the injection nozzles, no performance difficulties need be expected from vapour bubble formation. Therefore, the use of familiar heating measures is especially appropriate for the device according to the instant invention. For example, the injection device can be supplied with heated air, or even with off-gas from the motor. Heating the fuel-mix conduits is especially advantageous. Heating may also be by electrical means, so as to add heat even during motor startup. To this effect electrical resistance heating wires can, for instance, be considered inside the conduits. Furthermore, by heating the transport conduits, the formation of film-flow along the walls of the conduits can be prevented, even for very low differential pressure of the transport air. Heating allows for a considerably improved fuel atomization when the system is provided with atmospheric pressure air.

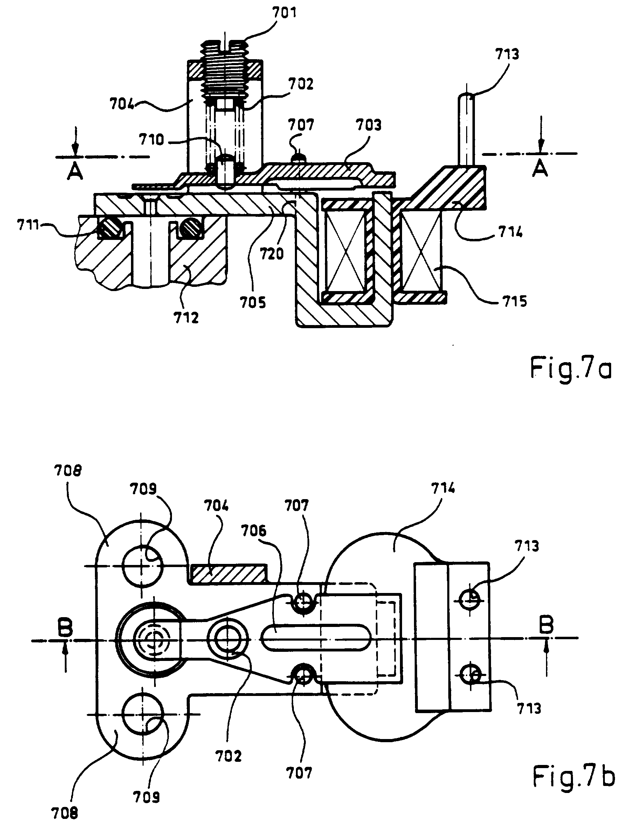

An especially simple design of an injection valve suitable for use with the device is shown in Fig. 7. Fig. 7a shows a cross-sectional view along line B-B, Fig 7b gives a top view of the valve as defined by line A-A. Identical parts are marked with the same reference numbers.

Valve carrier 705 of the injection valve consists of a single stamped sheeting part and is of low retentivity material. Valve carrier 705 features two side-brackets 708 which contain fastening holes 709. The valve is thread-connected at brackets 708 inside fuel manifold 712. To seal the valve at the contact location of valve carrier 705, a gasket ring 711 is provided. On valve :arrier 705 is an upwards directed flange 704, which carries calibration screw 701. Calibration screw 701 serves to set the force of reset spring 702. The force exerted by reset spring 702 should preferably be about 1-2 N. Reset spring 702 forces armature 703 onto valve carrier 705. Armature 703 contains a non-magnetic pin 710 which is pressure fitted. Pin 710 is additionally fixed to armature 703 by laser welding and serves as armature stop and as guidance for reset spring 702. Sidewise guidance for the armature is provided by the two pins 707. Armature 703 is also stamped with the impression 706 for improved flexural resistance. Magnet coil 715 is on coil body 714, which is slipped onto the magnet pole, and also carries contact pins 713. The valve seat is machined into valve carrier 705. Valve carrier 705 is flat-finished. Armature 703, together with pressure fitted pin 710, is finished by grinding the bottom side, and the back edge of armature 703 is undercut by the height of the armature stroke. The permanent air gap is formed by a thin non-magnetic coating of armature 703 or valve carrier 705.

The special advantage of the valve according to Fig. 7 over conventional valve designs is in the extraordinarily low manufacturing costs but, nevertheless, improved functional performance. Armature 703 is very low in mass, amounting only about to 0.3-0.4 g. Armature length is about 15 mm, width about 4 mm. Due to the rotational movement of the armature, only a small part of armature mass is involved with the complete stroke. Thus, the equivalent mass to an armature with linear movement is only about 0.1 g. Conventional single valves, with a needle valve, in contrast have armature masses of from 2-4 g. The low armature mass allows for extraordinarily fast floating movements. Using conventional triggering circuitry, on over-excitation of the valve during energizing, closing times of less than 0.3 ms can be achieved.
Therefore, due to the very high working speed of the valve, calibration of the reset spring is generally not necessary. Alternatively, the valve can also be equipped with a magnetic coil with very high electrical resistance, thus reducing the absorption of electrical energy. For example, the magnetic coil can have a resistance of up to 60 Ohms, for more than 1000 windings, still allowing for closing times of less than 1 ms. For such high coil resistance values, a calibration of the reset spring should, however, be considered, as is proposed in Fig. 7.

Alternatively, the coil carrier may also be a composite of several parts. The magnetic circuit can consist of a U-shaped segment, which is welded to tne valve carrier along dotted line 720. The permanent air gap is ground into the magnet pole which is located at the junction shown by the dotted line. This, first of all, results in the advantage that the valve carrier can be made of non-magnetizable material. With a non-magnetizable valve carrier higher attractive forces are generated, since in this case no magnetic forces acting in the opposite direction to armature attraction are generated in the valve carrier region. A further advantage results from the ability to omitt the otherwise required non-magnetizable coatings. Also, bracket 704 can be executed as a separate part. Bracket 704 can then be provided with extensions which are jointly threaded with the the valve carrier. The advantage of such a design is to be found in mechanical relief for the valve carrier. Calibration of the spring force of reset spring 702 can then be simply done by bending the bracket.

In conclusion, we wish to restate that, in place of compressed air, the fuel injection device according to the instant invention can also be driven with air at atmospheric pressure, or with off-gases from the combustion motor. The advantage of this resides in the lowered cost from the absence of the air pump. However, a considerable impairment of fuel preparation must then be allowed for. In addition, with slight modifications, the device can also be sued to advantage with other injection procedures for fuel metering. The listed dimensions, as well as the methods for joining individual parts, are to be considered as especially suitable, but only by way of examples. Pressure fitting may for instance be replaced by screw connections.

## Claims

1. A fuel injection device for the injection of fuel into the induction tube of combustion motor consisting of several electromagnetic injection valves having flat tilt armatures, a fuel distribution manifold, and a fuel pressure regulator, wherein the injection valves (604) including their electromagnets are completely surrounded by the fuel distribution manifold (601), and that the injection valves including their electromagnets, without any valve housing, are directly built into said fuel distribution manifold (601) and are completely immersed in fuel.

2. A fuel injection device as claimed in claim 1 characterized further in that the injection of fuel is accomplished with the aid of compressed air, said several electromagnetic injection valves feature valve obturators opening and closing an opening in respective valve seat (123), which, as the respective valves are energized, open the respective injection valves in the direction of the injection, the fuel is injected upstream through said opening in said valve seat to a mixing chamber (124, 611) and is impacted by compressed air, said mixing chamber having fuel mix conduits with injection nozzles arranged downstream.

3. A fuel injection device according to claim 2, characterized by the fact that the supply of air to said mixing chamber (124) occurs through one or more channels (404) which are slanted and point to the individual injection nozzles, so that fuel is injected roughly into the stagnation point of the conducted air stream.

4. A fuel injection device according to claim 2, characterized by the fact that the total fuel stream is directly conducted across electromagnetic valves (108, 604), and that valve seats (123) are located directly in the main flow of fuel.

5. A fuel injection device according to claim 2, characterized by the fact the individual valve seats (123) and metering valves (122) are directly machined into valve carrier (102, 705).

6. A fuel injection device according to claim 5, characterized by the fact that the individual valve seats (123) are produced separately by stamping, and that the stamping tool is centered directly in a metering nozzle (122) by means of a locator pin.

7. A fuel injection device according to claim 2, characterized by the fact that inside said fuel distribution manifold (601) and located below said valve seats, an air supply line (602) is provided for, which intersects the individual mixing chambers (611).

8. A fuel injection device according to claim 7, characterized by the fact that all feed conduits (115, 404) to mixing chambers (124, 611) are of the same lengths.

9. A fuel injection device according to claim 7, characterized by the fact that fuel-mix conduits (136, 408, 603) extending from said mixing chamber, said fuel mix conduits consist of plastic material.

10. A fuel injection device according to claim 7, characterized by having fuel-mix conduits (136, 408, 603) extending from said mixing chamber, said fuel mix conduits are made of metal.

11. A fuel injection device according to claim 10, characterized by the fact that said fuel-mix conduits (136, 408, 603) are provided with a tapered entry section (138, 411) to a diffuser device.

12. A fuel injection device according to claim 7, characterized by the fact that a partial stream of one of pure air and off-gases flows to the orifice region of said fuel-mix conduits (136, 408, 603) and concentrically envelops same.

13. A fuel injection device according to claim 12, characterized by the fact said fuel-mix conduits (136, 408, 603) are connected at one end in the mixing chamber space (611), so that a partial diffuser air stream flows concentrically to the orifices of said conduits, and there envelops the fuel mix flowing through said conduits as a mantle stream.

14. A fuel injection device according to claim 13, characterized by the fact that said conduits are concentrically supported by corrugated fins, where such fins may be attached to the outside of said conduits.

15. A fuel injection device according to claim 14, characterized by the fact that said conduits are conically tapered downstream of said valve seat, and that the fuel mix flows concentrically through the tapered section of said conduits, and that the diffuser cross-section of this conically tapered segment is about 1-2 mm.

16. A fuel injection device according to claim 15, characterized by the fact that the conically tapered terminal ends of said conduits continue into a tube like extension which has a cross-section of about 1-2 mm.

17. A fuel injection device according to claim 16, characterized by the fact that in these tube like extensions there are drilled orifices in the crosswise direction.

18. A fuel injection device according to claim 7, characterized by the fact that said conduits (136, 408, 603), are equipped with a gasket seal (137), that they feature a seating collar, and are fastened in place by means of a positioning clip (135).

19. A fuel injection device according to claim 1, characterized by the fact that the fuel distribution manifold (601) consists of plastic material.

20. A fuel injection device according to claim 1, characterized by the fact that the injection device, in combination with the fuel pressure regulator (104, 116, 117, 119 ,120), is a unitary device for mounting purposes.

21. A fuel injection device according to claim 1, characterized by the fact that the cabling of the individual valves (604) is arranged directly inside said fuel distribution manifold (601), and that the valves are electrically connected by means of one centrally located plug, which is located on the injection device.

22. A fuel injection device according to claim 21, characterized by the fact that the terminal electronics for triggering the injection valves are also located inside said fuel distribution manifold (601).

23. A fuel injection device according to claim 22, characterized by the fact that the terminal electronics for triggering the injection valves are directly connected to the injection valves and are tested together with the respective injection valve as a compound mounting segment.

24. A fuel injection device according to claim 1, characterized by the fact that said fuel distribution manifold (601) is equipped with several mixing devices (603) for fuel preparation, said mixing devices being connected with the respective injection locations by means of small internal diameter conduits (122), and further characterized by the fact that the fuel is transported to the individual injection locations with the assistance of air.

25. A fuel injection device according to claims 1 or 24, characterized by the fact that injection valves (604) are provided with one of a collar-type extension (605), and a circular groove, for fitting in place, the purpose being to center the metering nozzle (122) of the valve with respect to mixing device (603).

26. A fuel injection device according to claim 1, characterized by the fact that valve carrier (705) of the magnetic valve consists of a single stamped sheeting part.

27. A fuel injection device according to claim 26, characterized by the fact that the magnetic circuit of the valve (604) consists of U-shaped yoke which is solidly connected to a valve carrier (705) by laser welding, and further characterized by the fact that the permanent air gap in the magnetic pole at a junction location (720) is machined by grinding.

28. A fuel injection device according to claim 1, characterized by the fact that the tilt armature of the electromagnetic valve obtains lateral guidance from two pins (109, 707) which are pressure fitted into valve carrier (102, 705).

29. A fuel injection device according to claim 28, characterized by the fact that the armature of the electromagnetic valve is equipped with a detent pin (710), preferably of non-magnetizable material, and that said pin is located within the reset spring (702).

30. A fuel injection device according to claim 29, characterized by the fact that a bracket (704), which is directly connected to valve carrier (705) and forms an integral unit with same, serves as the abutment for said reset spring.

31. A fuel injection device according to claim 29, characterized by the fact that a bracket (708), in form of a separate mounting part is solidly joined to valve carrier (705) preferably by means of a threaded connection, and serves as the abutment for said reset spring.

32. A fuel injection device according to claim 30 or 31, characterized by the fact that the force exerted by said reset spring (110, 702) is calibrated by suitable bending of said bracket.

33. A fuel injection device according to claim 1, characterized by the fact that individual parts of the electromagnetic valve are mechanically strengthened by one of stamping, bracing and flanging.

34. A fuel injection device according to claim 1, characterized by the fact that magnetic return flow for the electromagnetic valve is by means of a U-shaped yoke (204) which itself is clamped by magnetic core (203), and is solidly joined with valve carrier (102, 201, 705) which consists of non-magnetizable material.

35. A fuel injection device according to claim 34, characterized by the fact that at the region of side-poles (209) two permanent air gaps are arranged for.

36. A fuel injection device according to claim 35, characterized by the fact that the pole surfaces of the magnetic circuit are machined together with the valve carrier.

37. A fuel injection device according to claim 34, characterized by the fact the magnetic circuit features two magnet cores (307 and 308) which are solidly joined to a non-magnetizable valve carrier (102, 301, 705), preferably by means of pressure fitting.

38. A fuel injection device according to claim 37, characterized by the fact that the permanent air gap is provided by the non-magnetizable valve carrier.

39. A fuel injection device according to claim 37, characterized by the fact that magnetic coils (304 and 306) are electrically connected by one of parallel and serial connections.

40. A fuel injection device according to claim 1, characterized by the fact that the cross-section of connection passage (107) between the electromagnetic injection valves and the fuel pressure regulator is dimensioned as large as possible, and that passage (107) should extend substantially across the total width of said regulator.

41. A fuel injection device according to claim 40 characterized by the fact that the cross-section area of the fuel feed connector (103) is very small in comparison to the cross-section area of said connection passage (107), and that the cross-section area of fuel feed connector (103) to the fuel injection device is less than 15 mm.

42. A fuel injection device according to claim 41 characterized by the fact that the cross-section area of the fuel feed connector is between 5 and 10 mm.

43. A fuel injection device according to claim 1, characterized by the fact that a fuel side-stream path (105) is arranged parallel to the pressure regulator.

44. A fuel injection device according to claim 43, characterized by the fact that the side-stream path (105) is formed by a coarse grinding procedure of one of the valve seat of a fuel connector (104) and the obturator (120) of the pressure regulator.

45. A fuel injection device according to claim 1, characterized by the fact that calibration of the injection device for the pressure regulator and the electromagnetic valves is done simultaneously.

46. A fuel injection device according to claim 45, characterized by the fact that the static calibration of the injection device is done only by calibrating the pressure regulator.

47. A fuel injection device according to claim 45, characterized by the fact that the injection device is statically calibrated by resetting the armature (108) stroke, and that a separate calibration of the pressure regulator can be omitted, this being applicable for the case where the injection device contains only a single electromagnetic valve.

## Patentansprüche

1. Kraftstoffeinspritzvorrichtung zum Einspritzen von Kraftstoff in das Ansaugrohr eines Verbrennungsmotors, die aus mehreren elektromagnetischen Einspritzventilen mit flachen Schwenkankern, einem Kraftstoffverteiler und einem Kraftstoffdruckregler besteht, wobei die Einspritzventile (604) einschließlich ihrer Elektromagneten vom Kraftstoffverteiler (601) vollständig umgeben sind und die Einspritzventile einschließlich ihrer Elektromagneten ohne jegliches Ventilgehäuse direkt in den Kraftstoffverteiler (601) eingebaut und vollständig in Kraftstoff eingetaucht sind.

2. Kraftstoffeinspritzvorrichtung nach Anspruch 1, dadurch gekennzeichnet, daß das Einspritzen von Kraftstoff mit Hilfe von Druckluft durchgeführt wird und daß die mehreren elektromagnetischen Einspritzventile Ventilschließvorrichtungen besitzen, die eine Öffnung in einem entsprechenden Ventilsitz (123) öffnen und schließen und die bei Erregung der entsprechenden Ventile die entsprechenden Einspritzventile in Richtung der Einspritzung öffnen, so daß der Kraftstoff aufstromseitig durch die Öffnung im Ventilsitz in eine Mischkammer (124, 611) eingespritzt und mit Druckluft beaufschlagt wird, wobei die Mischkammer Kraftstoffmischleitungen mit abstromseitig angeordneten Einspritzdüsen aufweist.

3. Kraftstoffeinspritzvorrichtung nach Anspruch 2, dadurch gekennzeichnet, daß die Luftzufuhr zur Mischkammer (124) durch einen oder mehrere Kanäle (404) durchgeführt wird, die geneigt sind und in Richtung auf die einzelnen Einspritzdüsen weisen, so daß der Kraftstoff ungefähr in den Stagnationspunkt des geführten Luftstromes eingespritzt wird.

4. Kraftstoffeinspritzvorrichtung nach Anspruch 2, dadurch gekennzeichnet, daß der gesamte Kraftstoffstrom direkt über die Elektromagnetventile (108, 604) geführt wird und daß die Ventilsitze (123) direkt im Hauptkraftstoff angeordnet sind.

5. Kraftstoffeinspritzvorrichtung nach Anspruch 2, dadurch gekennzeichnet, daß die einzelnen Ventilsitze (123) und Dosierventile (122) direkt in den Ventilträger (102, 705) eingearbeitet sind.

6. Kraftstoffeinspritzvorrichtung nach Anspruch 5, dadurch gekennzeichnet, daß die einzelnen Ventilsitze (123) separat durch Stanzen hergestellt sind und daß das Stanzwerkzeug mit Hilfe eines Positionierungsstiftes direkt in einer Dosierdüse (122) zentriert wird.

7. Kraftstoffeinspritzvorrichtung nach Anspruch 2, dadurch gekennzeichnet, daß innerhalb des Kraftstoffverteilers (601) und unter den Ventilsitzen eine Luftversorgungsleitung (602) vorgesehen ist, die die einzelnen Mischkammern (611) schneidet.

8. Kraftstoffeinspritzvorrichtung nach Anspruch 7, dadurch gekennzeichnet, daß sämtliche Zuführleitungen (115, 404) zu den Mischkammern (124, 611) gleiche Länge besitzen.

9. Kraftstoffeinspritzvorrichtung nach Anspruch 7, dadurch gekennzeichnet, daß sich Kraftstoffgemischleitungen (136, 408, 603) von der Mischkammer aus erstrecken und aus Kunststoff bestehen.

10. Kraftstoffeinspritzvorrichtung nach Anspruch 7, dadurch gekennzeichnet, daß sie Kraftstoffgemischleitungen (136, 408, 603) aufweist, die sich von der Mischkammer aus erstrecken und aus Metall bestehen.

11. Kraftstoffeinspritzvorrichtung nach Anspruch 10, dadurch gekennzeichnet, daß die Kraftstoffgemischleitungen (136, 408, 603) mit einem konischen Eintrittsabschnitt (138, 411) zu einem Diffusor versehen sind.

12. Kraftstoffeinspritzvorrichtung nach Anspruch 7, dadurch gekennzeichnet, ein Teilstrom von Reinluft oder Abgasen zum Öffnungsbereich der Kraftstoffgemischleitungen (136, 408, 603) strömt und diesen konzentrisch umgibt.

13. Kraftstoffeinspritzvorrichtung nach Anspruch 12, dadurch gekennzeichnet, daß die Kraftstoffgemischleitungen (136, 408, 603) an einem Ende im Mischkammerraum (611) angeschlossen sind, so daß ein Teildiffusorluftstrom konzentrisch zu den Öffnungen der Leitungen strömt und dort das durch die Leitungen fließende Kraftstoffgemisch als Mantelstrom umhüllt.

14. Kraftstoffeinspritzvorrichtung nach Anspruch 13, dadurch gekennzeichnet, daß die Leitungen konzentrisch von Rippen gelagert werden, die an der Außenseite der Leitungen befestigt sein können.

15. Kraftstoffeinspritzvorrichtung nach Anspruch 14, dadurch gekennzeichnet, daß die Leitungen abstromseitig des Ventilsitzes konisch ausgebildet sind, daß das Kraftstoffgemisch konzentrisch durch den konischen Abschnitt der Leitungen strömt und daß der Diffusorquerschnitt dieses konischen Segmentes etwa 1-2 mm beträgt.

16. Kraftstoffeinspritzvorrichtung nach Anspruch 15, dadurch gekennzeichnet, daß sich die konischen Enden der Leitungen in eine rohrförmige Verlängerung fortsetzen, die einen Querschnitt von etwa 1-2 mm besitzt.

17. Kraftstoffeinspritzvorrichtung nach Anspruch 16, dadurch gekennzeichnet, daß sich in diesen rohrförmigen Verlängerungen in Querrichtung gebohrte Öffnungen befinden.

18. Kraftstoffeinspritzvorrichtung nach Anspruch 7, dadurch gekennzeichnet, daß die Leitungen (136, 408, 603) mit einer Dichtung (137) versehen sind, daß sie einen Sitzflansch aufweisen und daß sie mit Hilfe einer Positionierungsklammer (135) fixiert sind.

19. Kraftstoffeinspritzvorrichtung nach Anspruch 1, dadurch gekennzeichnet, daß der Kraftstoffverteiler (601) aus Kunststoff besteht.

20. Kraftstoffeinspritzvorrichtung nach Anspruch 1, dadurch gekennzeichnet, die Einspritzvorrichtung in Kombination mit dem Kraftstoffdruckregler (104, 116, 117, 119, 120) für Montagezwecke eine einheitliche Vorrichtung bildet.

21. Kraftstoffeinspritzvorrichtung nach Anspruch 1, dadurch gekennzeichnet, daß die Verkabelung der einzelnen Ventile (604) direkt innerhalb des Kraftstoffverteilers (601) angeordnet ist und daß die Ventile mit Hilfe von einem mittig angeordneten Stecker, der in der Einspritzvorrichtung angeordnet ist, elektrisch angeschlossen sind.

22. Kraftstoffeinspritzvorrichtung nach Anspruch 21, dadurch gekennzeichnet, daß die Elektronik zum Auslösen der Einspritzventile ebenfalls innerhalb des Kraftstoffverteilers (601) angeordnet ist.

23. Kraftstoffeinspritzvorrichtung nach Anspruch 22, dadurch gekennzeichnet, daß die Elektronik zum Auslösen der Einspritzventile direkt mit den Einspritzventilen verbunden ist und zusammen mit dem entsprechenden Einspritzventil als Verbundmontagesegment getestet wird.

24. Kraftstoffeinspritzvorrichtung nach Anspruch 1, dadurch gekennzeichnet, daß der Kraftstoffverteiler (601) mit mehreren Mischvorrichtungen (603) zur Kraftstoffzubereitung versehen ist, wobei die Mischvorrichtungen mit Hilfe von Leitungen (122) mit kleinem Innendurchmesser an die entsprechenden Einspritzstellen angeschlossen sind, und daß der Kraftstoff mit Hilfe von Luft zu den einzelnen Einspritzstellen gefördert wird.

25. Kraftstoffeinspritzvorrichtung nach den Ansprüchen 1 oder 24, dadurch gekennzeichnet, daß die Einspritzventile (604) mit einer kragenförmigen Verlängerung (605) oder einer Kreisnut zur Einpassung versehen sind, um die Dosierdüse (122) des Ventils relativ zur Mischvorrichtung (603) zu zentrieren.

26. Kraftstoffeinspritzvorrichtung nach Anspruch 1, dadurch gekennzeichnet, daß der Ventilträger (705) des Magnetventiles aus einem einzigen Stanzblechteil besteht.

27. Kraftstoffeinspritzvorrichtung nach Anspruch 26, dadurch gekennzeichnet, daß der Magnetkreis des Ventils (604) aus einem U-förmigen Joch besteht, das durch Laserschweißen fest mit einem Ventilträger (705) verbunden ist, und daß der permanente Luftspalt im Magnetpol an einer Verbindungsstelle (720) durch Schleifen eingearbeitet ist.

28. Kraftstoffeinspritzvorrichtung nach Anspruch 1, dadurch gekennzeichnet, daß der Schwenkanker des Elektromagnetventils seitlich von zwei Stiften (109, 707) geführt ist, die durch Druckpassung im Ventilträger (102, 705) angeordnet sind.

29. Kraftstoffeinspritzvorrichtung nach Anspruch 28, dadurch gekennzeichnet, daß der Anker des Elektromagnetventils mit einem Haltestift (710), vorzugsweise aus nicht magnetisierbarem Material, versehen ist und daß der Haltestift innerhalb der Rücksetzfeder (702) angeordnet ist.

30. Kraftstoffeinspritzvorrichtung nach Anspruch 29, dadurch gekennzeichnet, daß ein Arm (704), der direkt mit dem Ventilträger (705) verbunden ist und mit diesem eine einstückige Einheit bildet, als Anschlag für die Rücksetzfeder dient.

31. Kraftstoffeinspritzvorrichtung nach Anspruch 29, dadurch gekennzeichnet, daß ein Arm (708) in der Form eines separaten Montageteiles fest mit dem Ventilträger (705) verbunden ist, vorzugsweise mit Hilfe einer Schraubverbindung, und als Anschlag für die Rücksetzfeder dient.

32. Kraftstoffeinspritzvorrichtung nach Anspruch 30 oder 31, dadurch gekennzeichnet, daß die von der Rücksetzfeder (110, 702) ausgeübte Kraft durch geeignetes Verbiegen des Armes eingestellt wird.

33. Kraftstoffeinspritzvorrichtung nach Anspruch 1, dadurch gekennzeichnet, daß einzelne Teile des Elektromagnetventiles durch Stanzen, Verstreben oder Flanschen mechanisch verfestigt sind.

34. Kraftstoffeinspritzvorrichtung nach Anspruch 1, dadurch gekennzeichnet, daß der magnetische Rückfluß für das Elektromagnetventil über ein U-förmiges Joch (204) erfolgt, das am Magnetkern (203) festgeklemmt und mit dem Ventilträger (102, 201, 705), der aus nicht magnetisierbarem Material besteht, fest verbunden ist.

35. Kraftstoffeinspritzvorrichtung nach Anspruch 34, dadurch gekennzeichnet, daß im Bereich von Seitenpolen (209) zwei permanente Luftspalte angeordnet sind.

36. Kraftstoffeinspritzvorrichtung nach Anspruch 35, dadurch gekennzeichnet, daß die Polflächen des Magnetkreises zusammen mit dem Ventilträger bearbeitet sind.

37. Kraftstoffeinspritzvorrichtung nach Anspruch 34, dadurch gekennzeichnet, daß der Magnetkreis zwei Magnetkerne (307, 308) aufweist, die mit einem nicht magnetisierbaren Ventilträger (102, 301, 705) verbunden sind, und zwar vorzugsweise durch Druckpassung.

38. Kraftstoffeinspritzvorrichtung nach Anspruch 37, dadurch gekennzeichnet, daß der permanente Luftspalt vom nicht magnetisierbaren Ventilträger vorgesehen wird.

39. Kraftstoffeinspritzvorrichtung nach Anspruch 37, dadurch gekennzeichnet, daß die Magnetspulen (304, 306) durch Parallelschaltung oder Reihenschaltung elektrisch miteinander verbunden sind.

40. Kraftstoffeinspritzvorrichtung nach Anspruch 1, dadurch gekennzeichnet, daß der Querschnitt des Verbindungskanales (107) zwischen den elektromagnetischen Einspritzventilen und dem Kraftstoffdruckregler so groß wie möglich dimensioniert ist und daß sich der Kanal (107) im wesentlichen über die Gesamtbreite des Reglers erstrecken sollte.

41. Kraftstoffeinspritzvorrichtung nach Anspruch 40, dadurch gekennzeichnet, daß der Querschnittsbereich des Kraftstoffzufuhranschlusses (103) im Vergleich zum Querschnittsbereich des Verbindungskanales (107) sehr klein ist und daß der Querschnittsbereich des Kraftstoffzufuhranschlusses (103) für die Kraftstoffeinspritzvorrichtung weniger als 15 mm beträgt.

42. Kraftstoffeinspritzvorrichtung nach Anspruch 41, dadurch gekennzeichnet, daß der Querschnittsbereich des Kraftstoffzufuhranschlusses zwischen 5 und 10 mm liegt.

43. Kraftstoffeinspritzvorrichtung nach Anspruch 1, dadurch gekennzeichnet, daß ein Kraftstoffseitenstromweg (105) parallel zum Druckregler angeordnet ist.

44. Kraftstoffeinspritzvorrichtung nach Anspruch 43, dadurch gekennzeichnet, daß der Seitenstromweg (105) durch einen Grobschleifvorgang des Ventilsitzes eines Kraftstoffanschlusses (104) oder einer Schließvorrichtung (120) des Druckreglers ausgebildet ist.

45. Kraftstoffeinspritzvorrichtung nach Anspruch 1, dadurch gekennzeichnet, daß die Einstellung der Einspritzvorrichtung für den Druckregler und die Elektromagnetventile gleichzeitig durchgeführt wird.

46. Kraftstoffeinspritzvorrichtung nach Anspruch 45, dadurch gekennzeichnet, daß die statische Einstellung der Einspritzvorrichtung nur durch Einstellung des Druckreglers durchgeführt wird.

47. Kraftstoffeinspritzvorrichtung nach Anspruch 45, dadurch gekennzeichnet, daß die Einspritzvorrichtung durch Rückstellen des Hubes des Ankers (108) statisch eingestellt wird und daß auf eine separate Einstellung des Druckreglers verzichtet werden kann, wenn die Einspritzvorrichtung nur ein einziges Elektromagnetventil enthält.

## Revendications

1. Dispositif d'injection de carburant destiné à l'injection de carburant dans le collecteur d'admission d'un moteur à combustion, consistant en plusieurs électrovannes à induits basculants plats, une rampe de distribution de carburant, et un régulateur de pression de carburant, dans lequel les électrovannes d'injection (604), y compris leurs électroaimants, sont complètement entourées par la tubulure (601) de distribution de carburant, et dans lequel les électrovannes d'injection, y compris leurs électroaimants sont directement montées, sans aucun boîtier, dans ladite rampe (601) de distribution de carburant et sont complètement immergées dans le carburant.

2. Dispositif d'injection de carburant selon la revendication 1 caractérisé en outre en ce que l'injection de carburant est réalisée à l'aide d'air comprimé, lesdites plusieurs électrovannes d'injection comportent des obturateurs de soupapes qui ouvrent et ferment une ouverture ménagée dans un siège respectif (123) de soupape, qui ouvrent les soupapes d'injection respectives dans le sens de l'injection au fur et à mesure que les électrovannes d'injection respectives sont excitées, le carburant est injecté en amont à travers ladite ouverture de soupape vers une chambre de mélange (124, 611) et est percuté par de l'air comprimé, ladite chambre de mélange incluant des conduits de mélange de carburant qui comportent des gicleurs d'injection agencés en aval.

3. Dispositif d'injection de carburant selon la revendication 2, caractérisé par le fait que l'amenée d'air à ladite chambre de mélange (124) s'effectue à travers un ou plusieurs canaux (404) qui sont inclinés et orientés vers les gicleurs d'injection individuels, de sorte que du carburant est injecté approximativement au point de stagnation du courant d'air conduit.

4. Dispositif d'injection de carburant selon la revendication 2, caractérisé par le fait que le courant total de carburant est directement conduit de manière à traverser les électrovannes (108, 604) et en ce que des sièges (123) de soupape sont positionnés directement dans le flux principal du carburant.

5. Dispositif d'injection de carburant selon la revendication 2, caractérisé par le fait que les sièges individuels (123) de soupape et les soupapes doseuses (122) sont directement usinées dans le support (102, 705) de vanne.

6. Dispositif d'injection de carburant selon la revendication 5, caractérisé par le fait que les sièges individuels (123) de soupape sont produits séparément par estampage et en ce que l'outil d'estampage est directement centré dans un gicleur doseur (122) au moyen d'une broche de positionnement.

7. Dispositif d'injection de carburant selon la revendication 2, caractérisé par le fait qu'une ligne d'amenée d'air (602), par laquelle les chambres individuelles de mélange (611) sont intersectées, est disposée à l'intérieur de ladite rampe (601) de distribution de carburant et est située au dessous desdits sièges de soupapes.

8. Dispositif d'injection de carburant selon la revendication 7, caractérisé par le fait que tous les conduits d'alimentation (115, 404) qui vont vers les chambres de mélange (124, 611) sont tous de la même longueur.

9. Dispositif d'injection de carburant selon la revendication 7, caractérisé par le fait que les conduits (136, 408, 603) de mélange de carburant s'étendent depuis ladite chambre de mélange, et que lesdits conduits de mélange de carburant sont en matière plastique.

10. Dispositif d'injection de carburant selon la revendication 7, caractérisé en ce qu'il comprend des conduits (136, 408, 603) de mélange de carburant qui s'étendent depuis ladite chambre de mélange et que lesdits conduits de mélange de carburant sont en métal.

11. Dispositif d'injection de carburant selon la revendication 10, caractérisé par le fait que lesdits conduits (136, 408, 603) de mélange de carburant comportent une section d'entrée effilée (138, 411) vers un dispositif diffuseur.

12. Dispositif d'injection de carburant selon la revendication 7, caractérisé par le fait qu'un courant partiel, soit d'air pur, soit de gaz d'échappement, s'écoule vers la région d'orifice desdits conduits (136, 408, 603) de mélange de carburant et les enveloppe de façon concentrique.

13. Dispositif d'injection de carburant selon la revendication 12, caractérisé par le fait que les conduits (136, 408, 603) de mélange de carburant sont reliés à une première de leurs extrémités dans l'espace (611) de la chambre de mélange, de sorte qu'un courant d'air partiel de diffuseur s'écoule de façon concentrique vers les orifices desdits conduits, et y enveloppe, sous la forme d'un courant enveloppant, le mélange de carburant qui s'écoule à travers lesdits conduits.

14. Dispositif d'injection de carburant selon la revendication 13, caractérisé par le fait que lesdits conduits sont supporté de façon concentrique par des ailettes à nervures, lesdites ailettes pouvant être attachées à l'extérieur desdits conduits.

15. Dispositif d'injection de carburant selon la revendication 14, caractérisé par le fait que lesdits conduits sont effilés coniquement en aval dudit siège de soupape, et en ce que le mélange de carburant s'écoule de façon concentrique à travers la section effilée desdits conduits, et en ce que la section transversale de diffuseur de ce segment effilé coniquement est d'environ 1 à 2 mm.

16. Dispositif d'injection de carburant selon la revendication 15, caractérisé par le fait que les extrémités finales effilées coniquement desdits conduits se continuent en un prolongement de forme tubulaire dont la section transversale est d'environ 1 à 2 mm.

17. Dispositif d'injection de carburant selon la revendication 16, caractérisé par le fait que des orifices sont percés dans la direction transversale dans ces prolongements de forme tubulaire.

18. Dispositif d'injection de carburant selon la revendication 7, caractérisé par le fait que lesdits conduits (136, 408, 603) sont équipés d'un joint d'étanchéité (137), qu'ils présentent une collerette de siège et sont fixés en place au moyen d'une pince de positionnement (135).

19. Dispositif d'injection de carburant selon la revendication 1, caractérisé par le fait que le collecteur (601) de distribution de carburant est en matière plastique.

20. Dispositif d'injection de carburant selon la revendication 1, caractérisé par le fait que le dispositif d'injection est, dans un but de montage, un dispositif d'un seul tenant avec le régulateur de pression (104, 116, 117, 119, 120) de carburant.

21. Dispositif d'injection de carburant selon la revendication 1, caractérisé par le fait que le câblage des électrovannes individuelles (604) est agencé directement à l'intérieur de ladite rampe (601) de distribution de carburant et en ce que les soupapes sont reliées électriquement au moyen d'une prise disposée de façon centrale, qui est située sur le dispositif d'injection.

22. Dispositif d'injection de carburant selon la revendication 21, caractérisé par le fait que les broches de l'électronique de déclenchement des électrovannes d'injection sont elles aussi situées à l'intérieur de ladite rampe (601) de distribution de carburant.

23. Dispositif d'injection de carburant selon la revendication 22, caractérisé par le fait que les broches de l'électronique de déclenchement des électrovannes d'injection sont directement reliées aux électrovannes d'injection et qu'elles sont essayées chacune avec l'électrovanne d'injection respective sous la forme d'un ensemble combiné de montage.

24. Dispositif d'injection de carburant selon la revendication 1, caractérisé par le fait que ladite rampe de distribution (601) est équipée de plusieurs dispositifs de mélange (603) pour la préparation du carburant, lesdits dispositifs de mélange étant reliés aux emplacements respectifs d'injection au moyen des conduits (122) de petit diamètre intérieur, et caractérisé en outre par le fait que le carburant est transporté à l'aide d'air vers les emplacements individuels d'injection.

25. Dispositif d'injection de carburant selon l'une des revendications 1 ou 24, caractérisé par le fait que les électrovannes d'injection (604) sont pourvues d'un prolongement (605) du type à collerette, et d'une rainure circulaire pour leur mise en place, le but étant de centrer le gicleur doseur (122) de l'électrovanne par rapport au dispositif de mélange (603).

26. Dispositif d'injection de carburant selon la revendication 1, caractérisé par le fait que le support (705) de l'électrovanne consiste en un unique élément de tôle estampé.

27. Dispositif d'injection de carburant selon la revendication 26, caractérisé par le fait que le circuit magnétique de l'électrvanne (604) consiste en une culasse configurée en U qui est solidement reliée par soudage laser à un support (705) de soupape, et caractérisé en outre par le fait que l'entrefer permanent dans le pôle magnétique à un emplacement de jonction (720) est usiné par rectification.

28. Dispositif d'injection de carburant selon la revendication 1, caractérisé par le fait que l'induit basculant de l'électrovanne obtient un guidage latéral de deux broches (109, 707) qui sont montées par pression dans le support (102, 705) de soupape.

29. Dispositif d'injection de carburant selon la revendication 28, caractérisé par le fait que l'induit de l'électrovanne est équipé d'une broche de positionnement (710), de préférence en matière non magnétisable, et en ce que ladite broche est située à l'intérieur du ressort de rappel (702).

30. Dispositif d'injection de carburant selon la revendication 29, caractérisé par le fait qu'une patte (704) qui est reliée directement au support (705) de soupape et qui forme une unité d'un seul tenant avec celle-ci sert de butée pour ledit ressort de rappel.

31. Dispositif d'injection de carburant selon la revendication 29, caractérisé par le fait qu'une patte (708), en forme d'élément de montage séparé, est solidement assemblée au support (705) de soupape, de préférence au moyen d'une connexion filetée, et sert de butée pour ledit ressort de rappel.

32. Dispositif d'injection de carburant selon la revendication 30 ou 31, caractérisé par le fait que la force exercée par ledit ressort de rappel (110, 702) est calibrée par une flexion appropriée par ladite patte.

33. Dispositif d'injection de carburant selon la revendication 1, caractérisé par le fait que des éléments individuels de l'électrovanne sont renforcés mécaniquement, soit par estampage, soit par raidissement, soit par formation de brides.

34. Dispositif d'injection de carburant selon la revendication 1, caractérisé par le fait que le flux magnétique de retour de l'électrovanne s'effectue au moyen d'une culasse configurée en U (204) qui est elle-même serrée par un noyau magnétique (203), et qui est solidement assemblée au support (102, 201, 705) de soupape qui consiste en une matière non magnétisable.

35. Dispositif d'injection de carburant selon la revendication 34, caractérisé par le fait que deux entrefers permanents sont ménagés à la région des pôles latéraux (209).

36. Dispositif d'injection de carburant selon la revendication 35, caractérisé par le fait que les surfaces polaires du circuit magnétique sont usinées avec le support de soupape.

37. Dispositif d'injection de carburant selon la revendication 34, caractérisé par le fait que le circuit magnétique comporte deux noyaux (307 et 308) d'aimants, qui sont assemblés de façon solide sur un support non magnétisable (102, 301, 705) de soupape, de préférence par un montage par pression.

38. Dispositif d'injection de carburant selon la revendication 37, caractérisé par le fait que l'entrefer permanent est réalisé par le support non magnétisable de soupape.

39. Dispositif d'injection de carburant selon la revendication 37, caractérisé par le fait que des bobines magnétiques (304 et 306) sont reliées électriquement par des liaisons, soit parallèles, soit en série.

40. Dispositif d'injection de carburant selon la revendication 1, caractérisé par le fait que la section transversale du passage (107) de connexion entre les électrovannes d'injection et le régulateur de pression de carburant est dimensionné aussi grand que possible, et en ce que le passage (107) devrait s'étendre sensiblement sur toute la largeur dudit régulateur.

41. Dispositif d'injection de carburant selon la revendication 40 caractérisé par le fait que la superficie en section transversale du connecteur (103) d'alimentation de carburant est très faible par rapport à la superficie de la section transversale dudit passage (107) de connexion, et en ce que la superficie de la section transversale du connecteur (103) d'alimentation en carburant du dispositif d'injection de carburant est inférieure à 15 mm.

42. Dispositif d'injection de carburant selon la revendication 41 caractérisé par le fait que la superficie de la section transversale du connecteur d'alimentation du carburant est comprise entre 5 et 10 mm.

43. Dispositif d'injection de carburant selon la revendication 1, caractérisé par le fait qu'un trajet (105) de courant latéral de carburant est agencé en parallèle au régulateur de pression.

44. Dispositif d'injection de carburant selon la revendication 43, caractérisé par le fait que le trajet (105) de courant latéral est formé par un meulage grossier de l'un des sièges de soupape d'un connecteur (104) de carburant et de l'obturateur (120) du régulateur de pression.

45. Dispositif d'injection de carburant selon la revendication 1, caractérisé par le fait que l'étalonnage du dispositif d'injection est effectué simultanément pour le régulateur de pression et les électrovannes.

46. Dispositif d'injection de carburant selon la revendication 45, caractérisé par le fait que l'étalonnage statique du dispositif d'injection n'est effectué que par l'étalonnage du régulateur de pression.

47. Dispositif d'injection de carburant selon la revendication 45, caractérisé par le fait que le dispositif d'injection est étalonné statiquement par un nouveau réglage de la course de l'induit (108), et en ce qu'un étalonnage séparé du régulateur de pression peut être omis, ceci étant applicable dans le cas où le dispositif d'injection ne contient qu'une seule électrovanne.
